# DEMANDE DE BREVET EUROPEEN

(11) **EP 3 667 145 A1**
(43) Date de publication de la demande: **17.06.2020**
(21) Numéro de dépôt: 19213826.1
(22) Date de dépôt: 05.12.2019
(51) Int. Cl.: F16L 27/02, F16L 37/02, F16L 51/00, B60K 13/02, F02M 35/10, F16L 37/52, B29C 65/56

(54) **DISPOSITIF DE RACCORD DE CONDUIT DE GAZ SOUS PRESSION, CONDUIT D'AIR SOUS PRESSION ÉQUIPÉ D'UN TEL RACCORD, ET SYSTÈME ASSOCIÉ DE SURALIMENTATION EN AIR DE VÉHICULE AUTOMOBILE**

(30) Priorité: 12.12.2018 FR 1872727
(71) Demandeur: RENAULT s.a.s., 92100 Boulogne-Billancourt (FR)
(72) Inventeur: DELEFORTERIE, Nicolas, 78630 Morainvilliers (FR); CHALMETTE, Bruno, 92150 Suresnes (FR)

(57) **Abrégé**

Système de conduite (1) pour gaz sous pression, comprenant une portion de conduit rigide (2) tubulaire et un dispositif de bride d'assemblage (3), formant un anneau (33) de passage pour le gaz, le dispositif de bride d'assemblage (3) comprenant les éléments ci-après, se jouxtant axialement :
- un manchon cylindrique d'insertion (5), de diamètre extérieur (Φ2) conformé pour être emmanché dans la portion de conduit rigide (2),
- une bague d'assemblage disposée à une première extrémité du manchon cylindrique d'insertion (5),
- un bourrelet (7) de contact annulaire élastique s'étendant radialement depuis la surface extérieure du manchon ;
caractérisé en ce que le bourrelet (7) de contact est en appui sur la surface intérieure de la portion rigide pour former une étanchéité au gaz entre le manchon et la portion rigide, et pour autoriser un déplacement relatif de ladite portion rigide.

## Description

L'invention a pour objet les conduits pour gaz sous pression, et plus particulièrement les conduits d'air d'alimentation ou de suralimentation en air d'un moteur à combustion interne.

Dans les blocs moteurs automobiles, on trouve des conduits d'air de suralimentation. Un tel conduit d'air de suralimentation comporte en général une succession de portions de conduits rigides, destinées notamment à permettre de maintenir le conduit sur la structure du véhicule, et comporte aussi des portions de conduit souple, permettant de compenser les jeux de montage et de dilatation.

Lorsqu'un tel conduit d'air est branché en sortie d'un compresseur de suralimentation, une portion rigide est généralement nécessaire en sortie du compresseur, pour former "chambre de détente" pour les pulsations de pression engendrée par le compresseur. Le chevauchement des portions rigides et des portions souples impose la présence de portions rectilignes au niveau des zones de superposition portions rigides/portions souples.

Il existe un besoin pour des conduits d'air plus compacts et plus faciles à monter. L'invention propose à cette fin un système de conduit d'air comportant moins de portions de raccord, donc moins de portions rectilignes imposées par la succession de portions rigides et de portions souples de conduits.

A cette fin, il est proposé un système de conduite pour gaz sous pression, comprenant une portion de conduit rigide tubulaire et un dispositif de bride d'assemblage, formant un anneau de passage pour le gaz, le dispositif de bride d'assemblage comprenant les éléments ci-après, se jouxtant axialement :
- un manchon cylindrique d'insertion, de diamètre extérieur conformé pour être emmanché dans la portion de conduit rigide,
- une bague d'assemblage disposée à une première extrémité du manchon cylindrique d'insertion,
- un bourrelet de contact annulaire élastique s'étendant radialement depuis la surface extérieure du manchon ; et le bourrelet de contact est en appui sur la surface intérieure de la portion rigide pour former une étanchéité au gaz entre le manchon et la portion rigide, et pour autoriser un déplacement relatif de ladite portion rigide.

Selon un mode de mise en oeuvre particulièrement avantageux, la portion de conduit rigide est apte à pivoter autour d'un axe parallèle à un diamètre du bourrelet annulaire. Aussi, et de manière préférée, la bride d'assemblage comporte une butée pour limiter l'angle de pivotement. De plus, avantageusement, la portion de conduit rigide est apte à coulisser selon l'axe du conduit au-dessus du bourrelet de contact annulaire. Et en outre, avantageusement, la bride d'assemblage comporte une butée pour limiter le coulissement axial.

De manière préférentielle, le profil extérieur du bourrelet est défini, vu en coupe dans un plan axial, par une courbe arrondie, de manière à faciliter un glissement axial d'un cylindre enserrant l'extérieur du bourrelet.

Le bourrelet de contact est de préférence de diamètre extérieur strictement supérieur à un diamètre extérieur moyen de la portion cylindrique d'insertion.

Avantageusement, le bourrelet de contact peut être de diamètre extérieur maximal supérieur ou égal au diamètre intérieur d'accostage de la portion de conduit rigide. Le sommet du bourrelet devra alors être comprimé pour insérer la portion cylindrique d'insertion dans la première extrémité d'assemblage du conduit rigide.

Selon un mode de réalisation préféré, le bourrelet de contact peut terminer axialement le premier dispositif de bride d'assemblage.

Le bourrelet de contact peut être avantageusement monobloc avec la portion cylindrique d'insertion

De préférence, la première extrémité d'assemblage présente un diamètre intérieur localement élargi par rapport à une portion centrale de la portion de conduit rigide. De préférence, cette portion élargie s'étend axialement sur au moins une première longueur axiale, (dire aussi longueur de recouvrement). A cette fin, la première extrémité d'assemblage peut également présenter un diamètre extérieur localement élargi -par rapport au diamètre d'une portion centrale de la portion de conduit rigide.

La portion cylindrique d'insertion s'étend de préférence sur une longueur axiale supérieure ou égale à une première longueur axiale correspondant à la longueur axiale de la première extrémité d'assemblage de la portion de conduit rigide.

La portion de conduit rigide et le dispositif de bride d'assemblage sont configurés pour insérer la première extrémité de portion cylindrique d'insertion et le bourrelet annuaire dans la première extrémité d'assemblage de la portion de conduit rigide, de manière à former une liaison étanche au gaz.

La liaison étanche ainsi obtenue autorise, grâce à un contact glissant au niveau du bourrelet de contact, un débattement, parallèle à un axe géométrique central de la bague, du dispositif de bride par rapport à la portion de conduit rigide. La liaison étanche autorise en outre un débattement angulaire entre l'axe local de la portion de conduit rigide et l'axe central de la bague du dispositif de bride d'assemblage. Avantageusement, le débattement angulaire est d'au moins 4° d'angle de part et d'autre d'une position moyenne d'insertion du dispositif de bride dans la portion de conduit rigide.

On considère que le bourrelet termine axialement le dispositif de bride d'assemblage, si par exemple le bourrelet présente, à l'état non comprimé, une surépaisseur radiale maximale qui se trouve à une distance de l'extrémité axiale libre du dispositif de bride, qui est inférieure ou égale à cinq fois avantageusement inférieure ou égale à trois fois, la valeur de la surépaisseur maximale formée par le bourrelet et mesurée par différence radiale avec le diamètre extérieur minimal de la portion cylindrique d'insertion entre le bourrelet et la bague.

Le fait que le bourrelet termine axialement le dispositif de bride d'assemblage, permet de faciliter la liberté d'inclinaison relative de la portion de conduit rigide par rapport au dispositif de bride.

La première extrémité d'assemblage de la portion de conduit rigide, peut présenter une portion de diamètre intérieur élargi radialement par rapport à un diamètre moyen intérieur de la portion de conduit rigide.

Selon un mode de réalisation préféré, le dispositif de bride présente un diamètre intérieur sensiblement constant, de préférence sensiblement égal à un diamètre intérieur moyen de la portion de conduit rigide.

Le diamètre intérieur du premier dispositif de bride peut être par exemple égal à un diamètre intérieur de la portion de conduit rigide au niveau d'une portion centrale de la portion de conduite. Le bourrelet annulaire peut être réalisé en en matériau de type élastomère.

La portion cylindrique d'insertion du dispositif de bride peut par exemple comprendre un tube en matériau rigide, et comprendre un bourrelet annulaire solidaire du matériau du tube rigide.

Le bourrelet annuaire peut être avantageusement obtenu par surmoulage de matériau élastomère sur le tube en matériau rigide. Le bourrelet annulaire peut se prolonger axialement vers la bague d'assemblage, par un manchon de matériau élastomère, le manchon annulaire définissant au moins localement un diamètre extérieur de la portion cylindrique d'insertion.

Avantageusement, le manchon peut comporter une portion de diamètre extérieur constant, par exemple de longueur axiale supérieure ou égale à 0.7 fois la longueur axiale de la première extrémité d'assemblage. Ainsi, lors d'inclinaisons relatives de la portion de conduit rigide par rapport au dispositif de bride, la première extrémité d'assemblage, si elle vient à toucher le dispositif de bride en arrière du bourrelet, vient en contact métal sur élastomère, ce qui limite la bruyance et l'usure par frottement métal sur métal.

L'invention concerne également un système de conduite pour gaz sous pression dans lequel le dispositif de bride d'assemblage comporte un joint axial d'extrémité, moulé dans le même matériau élastomère que le bourrelet et le manchon, en continuité d'écoulement de matière avec le bourrelet et le manchon élastomère.

La bague d'assemblage du dispositif de bride peut comporter une portion de butée, radialement plus large que la première extrémité d'assemblage de la portion de conduit rigide. Avantageusement, la portion de butée comporte un épaulement définissant une surface d'appui perpendiculaire à l'axe d'écoulement du gaz, cette surface d'appui radiale étant de diamètre extérieur supérieur à un diamètre extérieur maximal de la première extrémité d'assemblage.

La première extrémité d'assemblage peut présenter une extrémité évasée de diamètre intérieur supérieur au diamètre extérieur maximal du bourrelet.

Le diamètre intérieur de la première extrémité d'assemblage, le diamètre extérieur de la portion cylindrique d'insertion du dispositif de bride, le diamètre maximal du bourrelet et la position axiale de ce diamètre maximal du bourrelet, sont configurés pour permettre une débattement axial entre la portion de conduit rigide et l'axe du dispositif de bride, allant jusqu'à +/- 4°.

La portion de conduit rigide peut être configurée pour être assemblée sur une structure de véhicule, en étant maintenue, outre au niveau de ses extrémités, uniquement par des points de fixation se trouvant à distance de la première extrémité d'assemblage et de la deuxième extrémité d'assemblage (par à distance on entend au moins à une distance équivalente à trois fois le diamètre minimal de la conduite, avantageusement au moins à 5 fois le diamètre minimal).

L'invention concerne également un système de conduite pour gaz sous pression tel que décrit précédemment, dans lequel la deuxième extrémité d'assemblage est associée à un deuxième dispositif de bride d'assemblage venant s'insérer dans la deuxième extrémité d'assemblage au niveau d'un deuxième bourrelet ménagé sur le deuxième dispositif de bride.

L'invention concerne également un véhicule automobile équipé d'un moteur à combustion interne avec système de suralimentation en air du moteur à combustion interne, et comprenant un système de conduite d'air tel que décrit précédemment, reliant une sortie d'un compresseur d'air à un refroidisseur d'air de suralimentation. Avantageusement, la portion de conduit rigide peut ne pas comporter d'autres portions rectilignes que sa première et/ou sa deuxième portion d'extrémités. On améliore ainsi la compacité du bloc moteur du véhicule.

L'invention concerne également un bloc moteur de véhicule automobile, comportant un système de suralimentation en air, le système de suralimentation en air comportant un système de conduite sous pression selon l'invention.

Quelques buts, caractéristiques et avantages de l'invention apparaîtront à la lecture de la description suivante, donnée uniquement à titre d'exemple non limitatif, et faite en référence aux dessins annexés sur lesquels :
[Fig. 1] est une vue d'une portion de bloc moteur de véhicule automobile, comprenant un système de conduite de gaz selon l'invention, pour relier entre elles, une sortie de turbocompresseur, et une conduite équipée d'un volet doseur d'air de suralimentation;
[Fig. 2] est une vue en coupe dans un plan axial d'une portion de conduite de gaz selon l'invention;
[Fig. 3] est une vue en perspective d'un dispositif de bride appartenant à une portion de conduite de gaz selon l'invention.

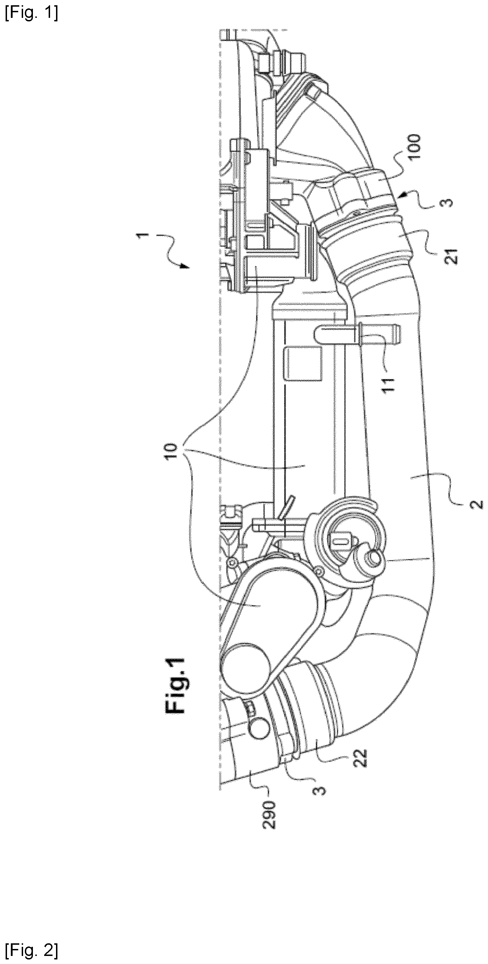

Tel qu'illustré sur la figure 1, un système de conduite sous pression selon l'invention, référencé 1, est assemblé sur une structure 10 de véhicule, structure dont on n'entrevoit que quelques portions sur la figure, notamment une extrémité 100 de conduite d'air amenant de l'air sous pression à partir d'un compresseur de turbocompresseur, et une conduite 200 de réception de cet air sous pression. Le système de conduite 1 permet de faire circuler l'air sous pression entre les extrémités 100 et 200 de conduits d'air du véhicule.

Le système de conduite sous pression selon l'invention comprend une première portion de conduit rigide 2 et comprend au moins un dispositif de bride d'assemblage 3.

De préférence, la longueur axiale, rectiligne ou curviligne, de la portion de conduit rigide 2 représente une majeure portion de la longueur du système de conduite 1, par exemple représente au moins 0,7 fois, de préférence au moins 0,9 fois la longueur totale du système de conduite 1.

Par conduit rigide, on entend ici un conduit dont les dimensions restent sensiblement constantes lors d'une manipulation du conduit à la main, par opposition par exemple à une portion de conduit réalisée en matériau de type élastomère. Sont par exemple considérés comme rigides des conduits en métal, en polymères injectés non élastomères, notamment en polymères de type polypropylène, polyamides, PVC, en polymères renforcés ou rigidifiés par des fibres de verre, des fibres de carbone ou autres fibres organiques ou minérales. De préférence, on utilise un matériau ou un alliage de matériaux pour le conduit rigide, qui présente un module d'Young à 25°C qui est strictement supérieur à 2.8Gpa, de préférence strictement supérieur à 3 GPa, avantageusement au moins égal à 10GPa. Selon un mode de réalisation préféré, le matériau de la portion de conduit rigide est choisi pour présenter un module de Young (par exemple un module de Young en traction, mesuré à 1% d'allongement) qui reste supérieur à 3 GPa à une température de 100°C.

La portion de conduit rigide 2 est connectée de manière étanche, au niveau d'une première extrémité d'assemblage 21, à l'arrivée 100 d'air sous pression, et est connectée, au niveau d'une deuxième extrémité d'assemblage 22 opposée axialement à la première extrémité d'assemblage, à une conduite d'air 200 amenant l'air sous pression vers un moteur à combustion interne (moteur à combustion interne non représenté).

La portion de conduit rigide 2 est maintenue, outre par ses extrémités axiales précédemment mentionnées, uniquement par un dispositif de fixation ponctuel 11. Le dispositif de fixation 11 se trouve à distance à la fois de la première extrémité 21 et de la deuxième extrémité 22 de la portion de conduit rigide (à distance : i;e. à une distance supérieure par exemple à deux fois le diamètre maximal de la portion de conduit rigide 2).

Selon un mode de réalisation, le système de conduite sous pression 1 peut comprendre un premier dispositif de bride 3 assemblé directement, par exemple en compression axiale étanche, sur la conduite d'air 100.

Le premier dispositif de bride 3 est inséré à l'intérieur de la portion de conduit rigide 2, au niveau d'une première extrémité d'assemblage 21 de la portion de conduit rigide 2.

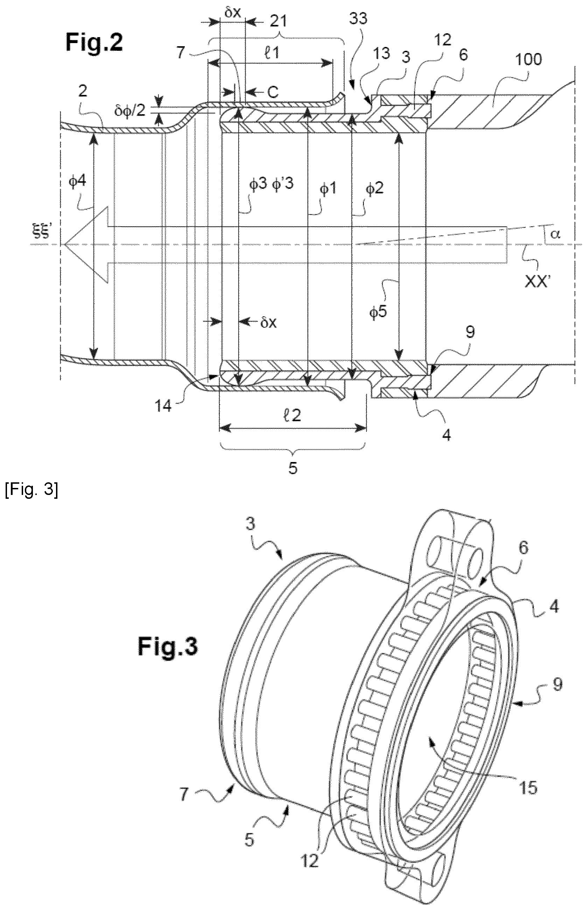

Selon certains modes de réalisation, le système de conduite sous pression peut comprendre un deuxième dispositif de bride 3' assemblé directement sur la conduite d'air 200. Le deuxième dispositif de bride 3' peut être inséré dans la portion de conduit rigide 2, au niveau de la deuxième extrémité d'assemblage 22. La figure 2 illustre la manière dont le dispositif de bride 3 interagit avec la portion de conduit rigide 2 (et dans certains modes de réalisation, la manière dont un deuxième dispositif de bride 3' interagit avec la portion de conduit rigide 2, à une extrémité du conduit rigide opposée au dispositif de bride 3).

Tel que visible sur la figure 2, le dispositif de bride 3 comprend une bague d'assemblage 4. La bague 4 porte ici un joint axial d'extrémité 9, pour venir accoster de manière étanche (i;e. étanche au gaz à faire circuler), sur une extrémité axiale 100 de conduite de gaz (ici une extrémité axiale 100 de conduite d'air de suralimentation).

A partir de la bague 4, le dispositif de bride 3 se poursuit, axialement à l'opposé de l'extrémité 100 de conduite de gaz, par une portion cylindrique d'insertion 5 de forme globalement cylindrique. De préférence, le diamètre extérieur de la portion cylindrique d'insertion 5 est strictement inférieur au diamètre extérieur de la bague 4. Une portion (par exemple au moins un premier tiers de la longueur axiale de la portion cylindrique d'insertion 5) est insérée à l'intérieur de la première extrémité d'assemblage 21, de manière à être en contact circonférentiel extérieur avec cette extrémité d'assemblage le long d'une ligne de contact formant zone de joint annulaire.

La portion cylindrique d'insertion 5 peut à cet effet être cerclée d'un bourrelet circonférentiel 7 formant une surépaisseur radiale. Le bourrelet peut dépasser radialement vers l'extérieur de la portion cylindrique d'insertion 5. Le bourrelet 7 peut être radialement compressible.

Le bourrelet 7 peut être par exemple réalisé en matériau de type élastomère, comme par exemple en caoutchouc naturel ou synthétique, en élastomère de type silicone (à propriétés mécaniques relativement stables en température). Le bourrelet en élastomère peut, selon certains modes de réalisation, comporter une peau extérieure plus dense et/ou plus résistante à l'abrasion, que le cœur du bourrelet. Le bourrelet peut être obtenu par surmoulage d'un matériau élastomère sur une portion cylindrique d'insertion 5 rigide moulée précédemment en matériau thermodur ou thermoplastique rigide, ou sur une portion cylindrique d'insertion 5 réalisée en métal, par exemple en acier.

Le joint axial d'extrémité 9, dans ce mode de réalisation particulier, est obtenu au cours d'une même opération de surmoulage, et dans le même matériau élastomère, que le bourrelet 7. La bague 4 peut être traversée, comme visible sur les figures 2 et 3, par des canaux 12 d'écoulement axial d'injection, permettant de réaliser le bourrelet 7 et le joint d'extrémité 9 au cours d'une même opération de surmoulage.

La portion cylindrique d'insertion 5 peut avantageusement présenter une forme cylindrique. La portion cylindrique d'insertion 5 peut avantageusement présenter au moins une portion de diamètre intérieur sensiblement identique (aux températures de fonctionnement usuelles du système de conduite sous pression) au diamètre intérieur sortant de l'extrémité de conduite de gaz 100.

Avantageusement, au repos (I.e. avant l'insertion du dispositif de bride 3 dans la portion de conduit rigide 2), le diamètre maximal extérieur du bourrelet peut être mesuré à une distance δx de l'extrémité libre de la portion cylindrique d'insertion 5, qui est comprise entre une et cinq fois la surépaisseur radiale δϕ/2 que forme le bourrelet par rapport au diamètre extérieur minimal de la portion cylindrique d'insertion 5, diamètre mesuré en arrière du bourrelet, c'est-à-dire entre le bourrelet et la bague.

Cette configuration du bourrelet permet une inclinaison relative de l'axe géométrique ξξ' de la portion de conduit rigide 2, par rapport à un axe géométrique XX' du dispositif de bride 3. Cette configuration permet également une translation axiale relative -de type coulissement axial, i.e. sensiblement parallèle à un axe local ξξ' de la conduite - de la portion de conduit rigide 2, par rapport au dispositif de bride 3, sur une distance modérée, (par exemple sur une distance maximale comprise entre 1/8 et ½ de la longueur de la portion cylindrique d'insertion 5 du dispositif de bride), sans perdre le contact étanche entre le bourrelet 7 et la portion de conduit rigide 2.

Sur la figure 2, on a par exemple désigné par l1, la longueur axiale d'une portion à profil intérieur cylindrique, de la première extrémité d'assemblage 21. Le diamètre intérieur Φ1 de cette portion, est plus large que le diamètre intérieur Φ4 de la portion de conduit rigide (diamètre Φ4 mesuré sur une zone centrale à section constante de cette portion rigide, située entre les extrémités d'assemblage 21 et 22).

Cette longueur l1 peut être sensiblement égale, ou peut être strictement supérieure, à la longueur axiale l2 de la portion cylindrique d'insertion 5 du dispositif de bride 3. Cette longueur axiale l2 est ici mesurée entre un épaulement radial 13 du dispositif de bride, -épaulement associé à une réduction du diamètre extérieur du dispositif de bride lors du passage de la bague à la portion cylindrique d'insertion 5-, et l'extrémité libre 14 de la portion cylindrique d'insertion 5.

Si l1 est supérieur à l2, on ne risque pas d'insérer le dispositif de bride 3 jusqu'à la zone de déduction de diamètre intérieur de la portion de conduit rigide, zone dans la quelle le diamètre intérieur se réduit de Φ1 à Φ4. On peut ainsi éviter un coincement du dispositif de bride à l'intérieur de la portion de conduit rigide.

L'invention ne se limite pas aux modes de réalisation décrit, et peut se décliner en de nombreuses variantes. Par exemple, le conduit rigide 2 peut ne pas être élargi radialement au niveau de sa portion de recouvrement avec le dispositif de bride.

Le dispositif de bride 3 présente ici un diamètre intérieur cylindrique Φ5 qui est sensiblement égale à Φ4 (et de préférence sensiblement égal au diamètre intérieur de la conduite 100), ce qui permet d'assurer une section d'écoulement constante entre la conduite 100 et la partie centrale de la portion de conduit rigide 2.

Le diamètre extérieur Φ2 de la portion cylindrique d'insertion 5 du dispositif de bride 3 -mesuré en arrière du bourrelet 7, éventuellement mesuré sur une zone de la portion cylindrique d'insertion 5 qui surmoulée par de l'élastomère- est strictement inférieur au diamètre intérieur Φ3 de l'extrémité d'assemblage 21 venant coiffer la portion cylindrique d'insertion 5.

Le diamètre Φ2 est strictement inférieur au diamètre Φ3 maximal du bourrelet 7 lorsque le bourrelet n'est pas comprimé.
De préférence, Le diamètre Φ2 est strictement inférieur au diamètre Φ3' maximal du bourrelet 7 lorsque le bourrelet est comprimé suite à son insertion dans l'extrémité d'assemblage 21.

De préférence, Le diamètre Φ2 est strictement inférieur au diamètre intérieur Φ1 de l'extrémité d'assemblage 21.
La surépaisseur radiale δΦ /2 du bourrelet non comprimé, ainsi que la surépaisseur radiale (Φ1- Φ2)/2 du bourrelet 7 comprimé, sont de préférence comprise entre 0,1 et 2 mm, cet intervalle étant limité par les efforts d'emmanchement.

De manière avantageuse, le diamètre extérieur Φ2 de la portion cylindrique d'insertion de bride, est supérieur ou égal à 1,5 fois, avantageusement supérieur à 1,7 fois, la longueur axiale l2 de la portion cylindrique d'insertion 5. En limitant ainsi la longueur axiale de la portion cylindrique d'insertion 5, on obtient un système de conduit compact, avec peu de portions de conduit rectilignes.

De manière avantageuse, la largeur axiale de la zone de contact entre bourrelet 7 et face intérieure de la première extrémité d'assemblage, est supérieure à deux fois la surépaisseur maximale du bourrelet non comprimé. On obtient ainsi une bonne étanchéité (meilleure qu'avec des joints toriques).

De manière avantageuse, le bourrelet non comprimé atteint son épaisseur radiale maximale, à une distance δx de l'extrémité libre 14 de la portion cylindrique d'insertion 5, qui est de préférence inférieure ou égale à 5 fois, avantageusement inférieure ou égale à 3 fois, la surépaisseur radiale δΦ/2 du bourrelet. On obtient ainsi une bonne mobilité en inclinaison, de la portion de conduit rigide 2, par rapport au dispositif de bride 3.

La figure 3 est une représentation en perspective d'un dispositif de bride appartenant à une portion de conduite de gaz selon l'invention. On retrouve sur la figure 3 des éléments communs aux figures précédentes, les mêmes éléments étant désignés par les mêmes références. On voit notamment sur la figure 3, une forme de bague 4 portant un joint axial d'extrémité 9, ce joint 9 étant obtenu lors d'une opération de surmoulage d'un insert rigide 15 formant le contour de la bague 4 et l'intérieur de la portion cylindrique d'insertion 5. L'insert rigide 15 est traversé, au niveau de la bague 4, par des canaux axiaux 12 permettant d'injecter l'élastomère par un seul point d'injection, à la fois au niveau du joint et autour de la portion cylindrique d'insertion 5 jusqu'au bourrelet. La bague présente ici des excroissances radiales 44 destinées à être traversée axialement, par exemple par des vis de fixation venant s'ancrer dans l'extrémité de conduite 100.

Le système de conduite sous pression selon l'invention permet de réduire le nombre de pièces à gérer et à monter lors de l'assemblage du véhicule. Le système de conduite est plus compact, moins sujet aux fuites car comprenant moins de zones de joint entre deux pièces. Le système de conduite est également plus étanche et moins bruyant.

## Revendications

1. Système de conduite (1) pour gaz sous pression, comprenant une portion de conduit rigide (2) tubulaire et un dispositif de bride d'assemblage (3), formant un anneau (33) de passage pour le gaz, le dispositif de bride d'assemblage (3) comprenant les éléments ci-après, se jouxtant axialement :
- un manchon cylindrique d'insertion (5), de diamètre extérieur (Φ2) conformé pour être emmanché dans la portion de conduit rigide (2),
- une bague d'assemblage disposée à une première extrémité du manchon cylindrique d'insertion (5),
- un bourrelet (7) de contact annulaire élastique s'étendant radialement depuis la surface extérieure du manchon ;
**caractérisé en ce que** le bourrelet (7) de contact est en appui sur la surface intérieure de la portion rigide pour former une étanchéité au gaz entre le manchon et la portion rigide, et pour autoriser un déplacement relatif de ladite portion rigide.

2. Système de conduite pour gaz sous pression selon la revendication 1, **caractérisé en ce que** la portion de conduit rigide (2) est apte à pivoter autour d'un axe parallèle à un diamètre du bourrelet (7) annulaire.

3. Système de conduite pour gaz sous pression selon la revendication précédente **caractérisé en ce que** la bride d'assemblage comporte une butée pour limiter l'angle de pivotement.

4. Système de conduite pour gaz sous pression selon la revendication 1 à 3, **caractérisé en ce que** la portion de conduit rigide (2) est apte à coulisser selon l'axe du conduit au-dessus du bourrelet (7) de contact annulaire.

5. Système de conduite pour gaz sous pression selon la revendication précédente, **caractérisé en ce que** la bride d'assemblage (5) comporte une butée pour limiter le coulissement axial.

6. Système de conduite pour gaz sous pression selon la revendication 1 à 5, dans lequel la première extrémité d'assemblage (21) de la portion de conduit rigide (2), présente une portion d'extrémité de diamètre intérieur (Φ1) élargi radialement par rapport à un diamètre moyen intérieur (Φ4) de la portion de conduit rigide (2).

7. Système de conduite pour gaz sous pression selon les revendications 1 à 6, dans lequel la portion cylindrique d'insertion (5) du dispositif de bride (3) comprend un tube (15) en matériau rigide, et dans lequel le bourrelet annulaire (7) est réalisé en un matériau de type élastomère et est solidaire du matériau du tube.

8. Système de conduite pour gaz sous pression selon la revendication 7, dans lequel le bourrelet annuaire (7) est obtenu par surmoulage de matériau élastomère sur le tube (15) en matériau rigide.

9. Système de conduite pour gaz sous pression selon les revendications 1 à 8, dans lequel le bourrelet annulaire (7) se prolonge axialement vers la bague d'assemblage (4), par un manchon de matériau élastomère.

10. Système de conduite pour gaz sous pression selon la revendication 9, dans lequel le dispositif de bride d'assemblage (3) comporte un joint axial (9) d'extrémité, moulé dans le même matériau élastomère que le bourrelet (7) et le manchon, en continuité d'écoulement de matière avec le bourrelet (7) et le manchon de matériau élastomère.

11. Système de conduite pour gaz sous pression selon l'une quelconque des revendications précédentes, dans lequel la bague d'assemblage (4) du dispositif de bride (3) comporte une portion de butée, radialement plus large que la première extrémité d'assemblage (21) de la portion de conduit rigide (2).

12. Système de conduite pour gaz sous pression selon l'une quelconque des revendications précédentes, dans lequel le diamètre intérieur (Φ1) de la première extrémité d'assemblage (21), le diamètre extérieur (Φ2) de la portion cylindrique d'insertion (5) du dispositif de bride (3), le diamètre maximal du bourrelet (7) et la position axiale de ce diamètre maximal du bourrelet, sont configurés pour permettre un débattement angulaire entre les axes centraux locaux de cylindres de la portion de conduit rigide (ξξ') et du dispositif de bride (XX'), le débattement angulaire étant supérieur en amplitude à +/- 15° d'angle de préférence supérieur ou égale à 20° d'angle.

13. Système de conduite pour gaz sous pression selon l'une quelconque des revendications précédentes, dans lequel la deuxième extrémité d'assemblage (22) est associée à un deuxième dispositif de bride d'assemblage venant s'insérer dans la deuxième extrémité d'assemblage (22) au niveau d'un deuxième bourrelet ménagé sur le deuxième dispositif de bride.

14. Véhicule automobile équipé d'un moteur à combustion interne avec système de suralimentation en air du moteur à combustion interne, et comprenant un système de conduite d'air (1) selon l'une quelconque des revendications précédentes, reliant une sortie d'un compresseur d'air (100) à une entrée (200) de refroidisseur d'air de suralimentation.
